# EUROPEAN PATENT APPLICATION

(11) **EP 3 225 382 A1**
(43) Date of publication of application: **04.10.2017**
(21) Application number: 17163932.1
(22) Date of filing: 30.03.2017
(51) Int. Cl.: B29C 65/52, A41H 43/04, D06H 5/00, A41D 27/24

(54) **CLOTH BONDING DEVICE**

(30) Priority: 31.03.2016 JP 2016071616
(71) Applicant: BROTHER KOGYO KABUSHIKI KAISHA, Nagoya-shi, Aichi-ken 467-8561 (JP)
(72) Inventor: IWAKOSHI, Hiroyasu, Aichi-ken, 467-8562 (JP)
(74) Representative: J A Kemp

(57) **Abstract**

An upward folding portion 120 and a lateral folding portion 130 are provided on a downstream side, in a conveyance direction, of a feed roller 13 and a nozzle 17. A presser plate 140 faces a curved surface 113 of a conveyance base 110. A conveyance roller 18 comes into contact with a top surface of a rear end portion of the conveyance base 110. The presser plate 140 inhibits the cloth disposed on the curved surface 113 from lifting up. The upward folding portion 120 scoops up the edge portion of the cloth on an inclined surface, and folds the edge portion upward. The lateral folding portion 130 folds the edge portion to the left. The conveyance roller conveys the cloth, while clamping and pressure bonding the edge portion and a facing portion that faces the edge portion between the conveyance roller 18 and the conveyance base 110.

## Description

### BACKGROUND

The present invention relates to a cloth bonding device.

A cloth bonding device is provided with a conveyance portion that conveys a cloth, and a nozzle that applies an adhesive. The conveyance portion is configured by two rollers, for example, and clamps and conveys the cloth, which is an object to be bonded. The nozzle applies the adhesive between sections of the cloth that are disposed facing each other. The conveyance portion conveys the cloth while pressing the cloth, thus bonding the sections of the cloth to each other.

When hemming processing is performed, in which a section in the vicinity of an edge of a cloth (hereinafter referred to as an "edge portion") is folded back and the folded back section is bonded, the cloth bonding device uses a guide mechanism that guides the folding back of the edge portion (refer to Japanese Laid-Open Patent Publication No. 2014-47447, for example). The cloth bonding device disposes the nozzle between the edge portion folded back by the guide mechanism and a facing portion that faces the edge portion as a result of the edge portion being folded back. The nozzle applies the adhesive to the facing portion and to a bent portion that is bent between the edge portion and the facing portion. The conveyance portion folds the cloth at the bent portion, and conveys the cloth while clamping and pressing the edge portion and the facing portion.

### SUMMARY

In the above-described cloth bonding device, in order to apply the adhesive, the nozzle maintains a constant gap with the facing portion. However, it is difficult for the nozzle to maintain a gap with the bent portion to be the same size as the gap with the facing portion, and it is possible that an application amount of the adhesive is not constant. When the nozzle cannot maintain the constant gap with respect to the facing portion and the bent portion, a difference may occur in application resistances. In this case, a difference arises in the stretch of the cloth at the facing portion and the bent portion and it is possible that the cloth after bonding may have ridges. In the cloth bonding device, if a fold back position of the edge portion is displaced with respect to the facing portion at a time of pressure bonding, it is possible that the adhesive may ooze from the edge portion, or the adhesive may not attach to the edge portion, resulting in a bonding defect.

It is an object of the present invention to provide a cloth bonding device capable of reliably bonding a folded back edge portion of a cloth.

A cloth bonding device of the present invention includes a conveyance base, a nozzle, a fold-back mechanism, and a conveyance roller. The conveyance base extends in a conveyance direction along which a cloth is conveyed. The nozzle is configured to apply adhesive onto a top surface of an edge portion, which is an end portion of the cloth in a direction intersecting the conveyance direction. The fold-back mechanism is disposed on a downstream side of the nozzle in the conveyance direction, and is configured to fold back the edge portion, to which the adhesive is adhered, in the direction intersecting the conveyance direction. The conveyance roller is disposed on the downstream side of the fold-back mechanism in the conveyance direction, and is configured to convey the cloth, which has been disposed on the conveyance base, in the conveyance direction. The conveyance roller clamps and presses the edge portion, which has been folded back by the fold-back mechanism, and a facing portion, which is a section of the cloth facing the folded back edge portion in the up-down direction between the conveyance roller and the conveyance base, and conveys to the downstream side in the conveyance direction.

Before folding back the edge portion of the cloth, the cloth bonding device applies the adhesive to the top surface of the edge portion. The adhesive is only applied to the one surface of the cloth, and thus the nozzle can easily control the gap between the nozzle and the cloth, and can keep constant an application amount of the adhesive onto the cloth. The nozzle can maintain the constant gap between the nozzle and the cloth, and thus, in an application range of the adhesive, the nozzle can maintain an even application resistance with respect to the cloth. As a result, the cloth bonding device can smoothly finish the edge portion of the cloth after bonding. The adhesive reliably adheres to the edge portion before the edge portion is folded back, and at the time of pressure bonding, the adhesive does not ooze out from an edge of the edge portion, nor is there a case in which the adhesive does not reach the edge of the edge portion.

The fold-back mechanism of the cloth bonding device of the present invention may include an upward folding portion and a lateral folding portion. The upward folding portion is configured to come into contact with a surface on the opposite side to an adhesive adhesion surface, to which the adhesive is adhered, of the edge portion, and to fold the edge portion upward. The lateral folding portion is disposed on the downstream side of the upward folding portion in the conveyance direction, and is configured to come into contact with the surface on the opposite side to the adhesive adhesion surface of the edge portion, and to fold the edge portion, which has been folded upward by the upward folding portion, in a lateral direction, and to dispose the edge portion above the facing portion with the adhesive adhesion surface facing downward. Each of the upward folding portion and the lateral folding portion is able to independently move between a folding position and a retreat position. The folding position is a position at which the cloth is folded and being positioned on a conveyance path of the cloth, on one side in a transverse direction intersecting the conveyance direction and the up-down direction. The retreat position is a position that is on the other side in the transverse direction with respect to the folding position and at which each of the upward folding portion and the lateral folding portion retreats from the conveyance path of the cloth. The fold-back mechanism may move the upward folding portion and the lateral folding portion to the retreat position before conveying the cloth, and when the cloth is being conveyed, the fold-back mechanism may move the upward folding portion to the folding position and folds the edge portion upward, and then moves the lateral folding portion to the folding position and folds the edge portion in the lateral direction. When the cloth is set on the fold-back mechanism, the upward folding portion and the lateral folding portion are positioned in the retreat position. The upward folding portion moves to the folding position and folds the edge portion of the cloth upward. After the upward folding portion has folded the edge portion upward, the lateral folding portion moves to the folding position and puts the edge portion into a folded back state. Since the upward folding portion and the lateral folding portion are not in the folding position when the cloth is set on the fold-back mechanism, an operator can easily set the cloth on the fold-back mechanism. The fold-back mechanism folds the edge portion of the cloth in a two-stage process, and can thus reliably fold back the cloth.

A surface on the one side in the transverse direction of the upward folding portion of the cloth bonding device of the present invention may form a first inclined portion that is inclined upwardly from the one side toward the other side in the transverse direction, and a second inclined portion that is positioned on the downstream side of the first inclined portion in the conveyance direction, and that is inclined upwardly from the one side toward the other side in the transverse direction. A inclined surface on the one side in the transverse direction of the second inclined portion may have the same angle of inclination as that of an inclined surface of the first inclined portion, and an inclined surface on the other side in the transverse direction of the second inclined portion may have a larger angle of inclination than that of the inclined surface of the first inclined portion, and may be positioned further to the one side than an end portion of the first inclined portion on the other side in the transverse direction. When the cloth is set on the fold-back mechanism, the cloth is disposed on the conveyance base. When the upward folding portion moves from the retreat position to the folding position, the first inclined portion and the second inclined portion are inclined at an acute angle with respect to the top surface of the conveyance base, and thus the first inclined portion and the second inclined portion can enter under the edge portion from the edge of the edge portion of the cloth, and can scoop up the edge portion. The second inclined portion has a section with a larger angle than that of the first inclined surface. Thus, the section of the edge portion that comes into contact with the first inclined portion forms a gently curved surface and is folded, while the section that comes into contact with the second inclined portion forms a more sharply curved surface and is folded. As a result, the upward folding portion can smoothly fold the edge portion of the cloth while increasing the size of the fold of the edge portion in the upward direction from the horizontal direction, from the upstream side to the downstream side in the conveyance direction.

The lateral folding portion of the cloth bonding device of the present invention may include a protruding portion which extends toward the one side in the transverse direction, and a bottom surface of which comes into contact with the surface on the opposite side of the adhesive adhesion surface of the edge portion. A gap between the protruding portion and a top surface of the conveyance base may be larger than a size of a two-fold thickness of the cloth in the up-down direction with respect to the top surface of the conveyance base, and is smaller than a width of the edge portion in the transverse direction. When the lateral folding portion moves from the retreat position to the folding position, the protruding portion presses and folds the edge portion, which has been folded upward by the upward folding portion, in a lateral direction, and a bottom surface of the protruding portion comes into contact with a non-adhesion surface on the opposite side to the adhesion surface. The gap between the protruding portion and the top surface of the conveyance base is smaller than the width of the edge portion, and thus, the protruding portion can maintain the folded-back state of the edge portion. The cloth bonding device conveys the cloth between the conveyance roller and the conveyance base while maintaining a folded-back width of the edge portion, and can pressure bond the edge portion and the facing portion.

In an arrangement position of the fold-back mechanism of the cloth bonding device of the present invention, the top surface of the conveyance base may be provided with a curved surface which is inclined upward from the upstream side toward the downstream side in the conveyance direction and which is curved downward, between both end portions of the curved surface in the conveyance direction. When the edge portion is folded back on a horizontal plane, in the cloth, a path difference occurs between the facing portion that is conveyed along the conveyance path, and the edge portion that is conveyed along the conveyance path while intersecting the conveyance path at the folded back section. A force that aims to return the folded back section to its original state is applied to the edge portion of the cloth in order to cancel out the path difference. In this case, it is possible that the width of the edge portion after being folded back may become smaller. By folding back the edge portion on the curved surface, the cloth can cancel out the path difference between the facing portion and the edge portion on the conveyance path. Thus, it becomes difficult for the force that aims to return the folded back section to its original state to be applied to the edge portion of the cloth. The cloth bonding device can pressure bond the edge portion and the facing portion in the state in which the fold-back width of the edge portion is kept constant.

The cloth bonding device of the present invention may be provided with a presser plate that is provided on the one side in the transverse direction of the upward folding portion and the lateral folding portion, the presser plate having a bottom surface, which follows the curved surface of the conveyance base, and extending in the conveyance direction. The cloth bonding device may also be provided with an up-and-down support portion that is configured to support the presser plate movably in the up-down direction. At a time of conveying the cloth, a position in the up-down direction of the presser plate supported by the up-and-down support portion may be a position in which the facing portion of the cloth is disposed between the bottom surface of the presser plate and the curved surface of the conveyance base. At the time of conveying the cloth, the cloth bonding device can hold the facing portion of the cloth between the bottom surface of the presser plate and the curved surface of the conveyance base. Thus, the presser plate can inhibit the cloth from lifting up from the curved surface as a result of the tension of the cloth. The presser plate can move in the up-down direction and thus, when the cloth is set to the fold-back mechanism, the operator can easily dispose the cloth between the presser plate and the conveyance base.

The cloth bonding device of the present invention may be provided with a drive portion that is configured to generate motive power that drives the up-and-down support portion and to move the presser plate in the up-down direction. The presser plate is able to be positioned at an upper end position, which is an upper end of a range over which the presser plate is able to move in the up-down direction, a lower end position, which is a lower end of the range over which the presser plate is able to move in the up-down direction, and at which the presser plate is in contact with the curved surface, and an intermediate position, which is between the upper end position and the lower end position, and at which a gap is formed between the presser plate and the curved surface. The intermediate position may be changeable in the up-down direction. When the cloth is set on the fold-back mechanism, the presser plate is positioned in the upper end position. Even if the operator sets the cloth on the fold-back mechanism while applying the adhesive to the edge portion, the edge portion does not come into contact with the presser plate, and the adhesive is not applied to the presser plate. When the fold-back mechanism first folds back the edge portion of the cloth, the presser plate is positioned in the lower end position. The presser plate clamps the cloth between the presser plate and the conveyance base, and can thus inhibit displacement of the cloth at the time of first being folded back. When the fold-back mechanism continues to fold back the edge portion of the cloth, the presser plate is positioned in the intermediate position. The facing portion of the cloth is disposed in the gap between the bottom surface of the presser plate and the curved surface of the conveyance base, and thus, the cloth can move smoothly without lifting up.

The cloth bonding device of the present invention may be provided with a presser support portion that is configured to support the presser plate movably in the transverse direction, and a presser fixing member that is configured to fix a position in the transverse direction of the presser support portion. By moving the position of the presser plate in the transverse direction, the position at which the presser plate holds the facing portion of the cloth is moved in the transverse direction, and thus, the cloth bonding device can adjust the fold-back width of the edge portion.

The nozzle of the cloth bonding device of the present invention may include a plurality of discharge outlets aligned in the transverse direction, and a positioning plate, which is positioned further to the other side in the transverse direction than the discharge outlet positioned at the end on the other side in the transverse direction, among the plurality of discharge outlets, and is positioned at a distance closer to the discharge outlet at the end than at least a distance between two of the discharge outlets. The positioning plate is configured to determine a position of the edge portion of the cloth. By determining the position of the edge of the cloth using the positioning plate, the discharge outlets in the vicinity of the positioning plate can reliably apply the adhesive to the end portion of the cloth. The cloth bonding device can maintain a uniform positional relationship between an application position of the adhesive and the edge of the cloth, and can improve bonding quality.

The positioning plate of the cloth bonding device of the present invention may be able to move in the transverse direction, and may include a position fixing member configured to fix a position of the positioning plate in the transverse direction. The operator can adjust a distance between the discharge outlet positioned at the end on the other side in the transverse direction and the positioning plate, in accordance with the material, the thickness and the like of the cloth. Thus, the cloth bonding device can maintain the uniform positional relationship between the application position of the adhesive and the edge of the cloth, and can improve the bonding quality.

The cloth bonding device of the present invention may be provided with a feed roller positioned on the downstream side of the nozzle in the conveyance direction and positioned below the cloth on the upstream side of the fold-back mechanism in the conveyance direction. The feed roller may form a predetermined gap between the feed roller and the nozzle, and may be configured to feed the cloth to the downstream side in the conveyance direction. The feed roller is used to feed the cloth, and thus an even application resistance can be maintained with respect to the cloth, and a constant application amount of the adhesive can be applied onto the edge portion.

### BRIEF DESCRIPTION OF THE DRAWINGS

Exemplary embodiments of the present disclosure will be described below in detail with reference to the accompanying drawings in which:
FIG. 1 is a perspective view of a cloth bonding device 1;
FIG. 2 is a front view of the cloth bonding device 1;
FIG. 3 is a left side view of the cloth bonding device 1;
FIG. 4 is an enlarged view inside a circle C1 shown in FIG. 1;
FIG. 5 is an enlarged view inside a circle C2 shown in FIG. 2;
FIG. 6 is an enlarged view inside a circle C3 shown in FIG. 3;
FIG. 7 is a perspective view of a nozzle 17;
FIG. 8 is an exploded perspective view of a fold-back mechanism 100;
FIG. 9 is a view showing an operation of the fold-back mechanism 100;
FIG. 10 is a diagram continuing from FIG. 9;
FIG. 11 is a diagram continuing from FIG. 10;
FIG. 12 is a diagram continuing from FIG. 11;
FIG. 13 is a diagram continuing from FIG. 12;
FIG. 14 is a view showing an operation in which the cloth bonding device 1 bonds an edge portion 31 and a facing portion 32 of a cloth 30.

### DETAILED DESCRIPTION OF EXEMPLARY EMBODIMENTS

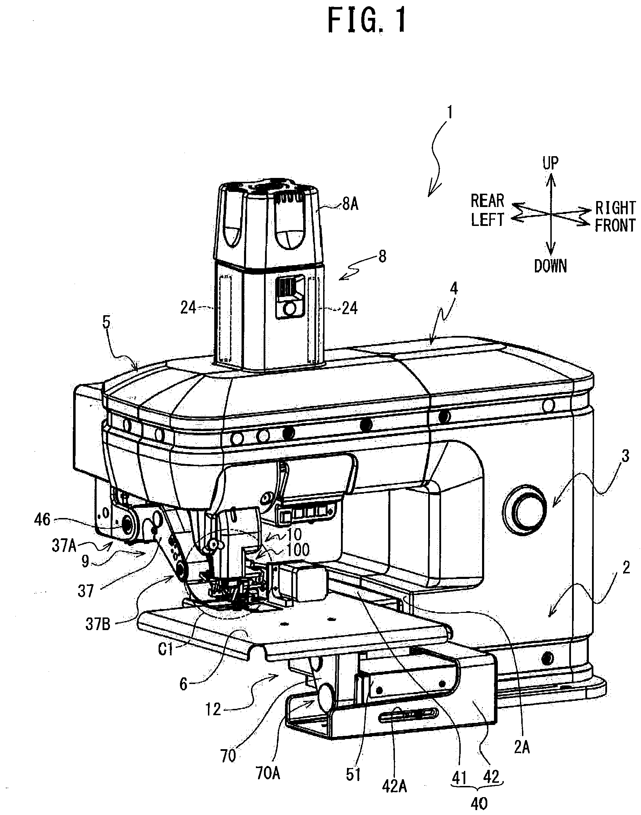

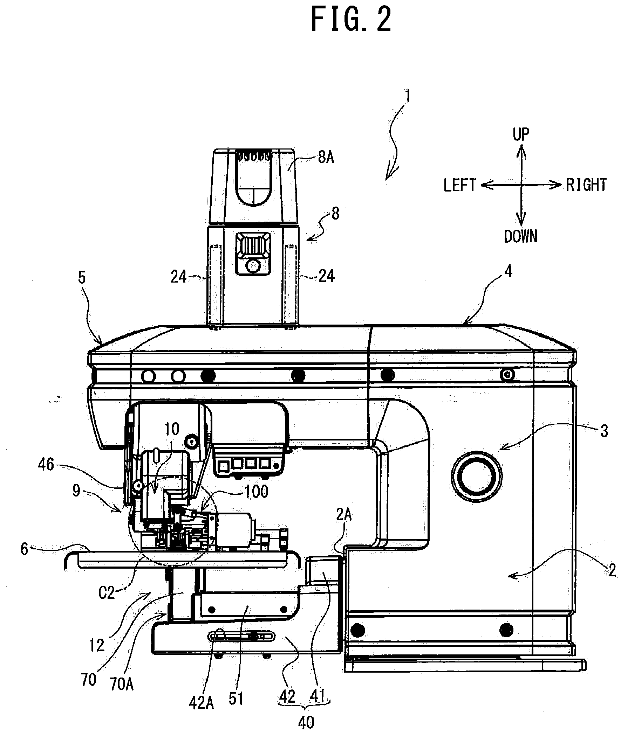

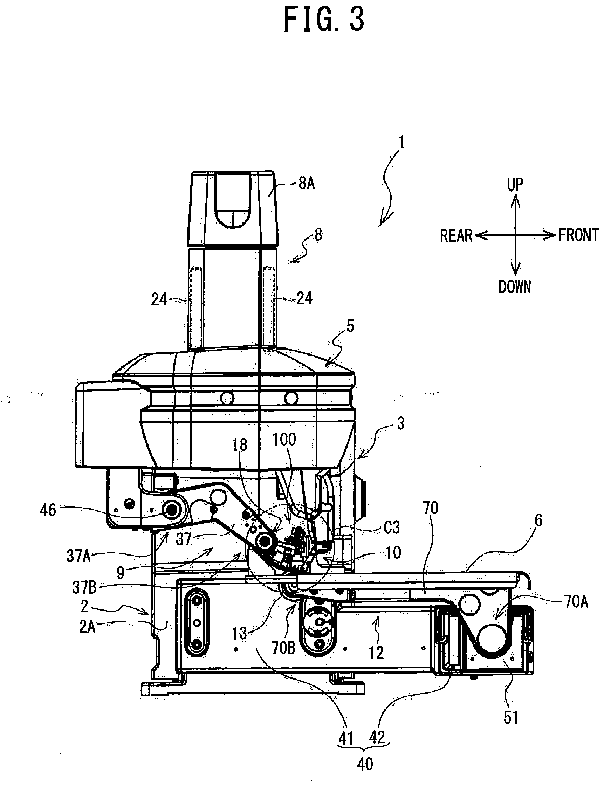

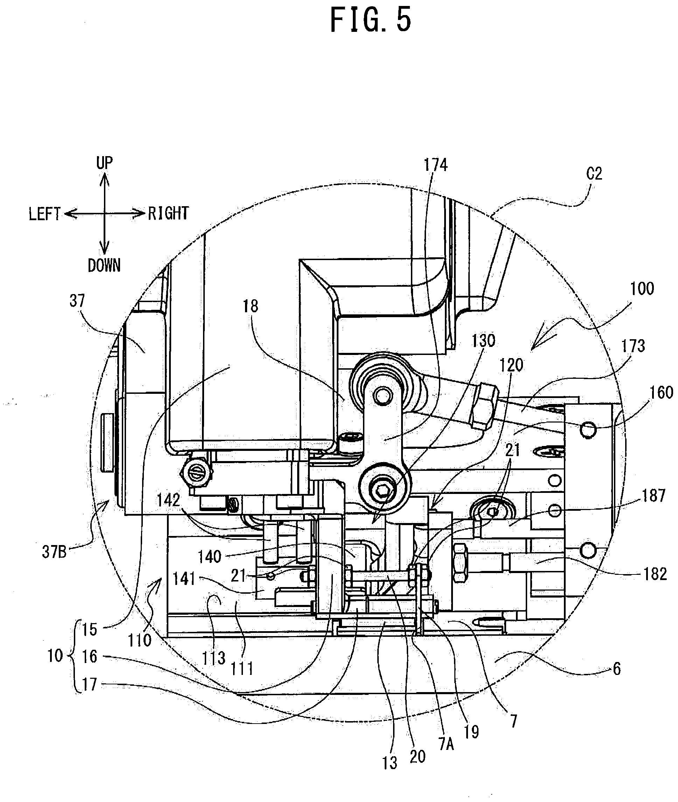

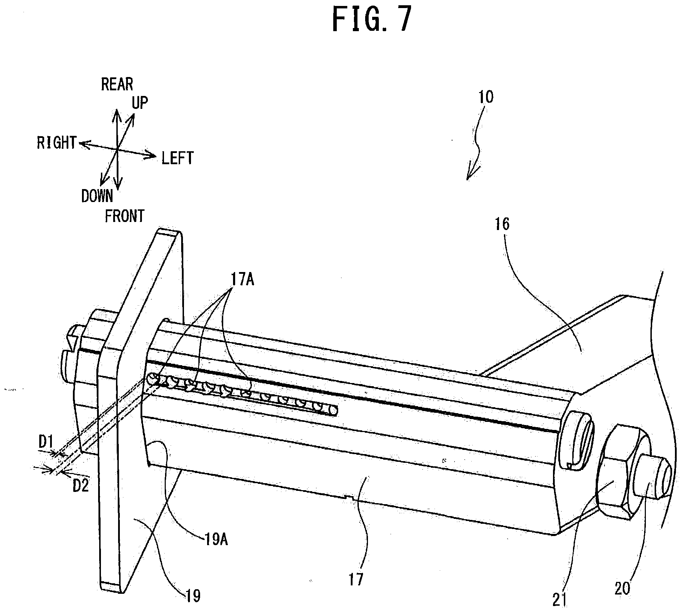

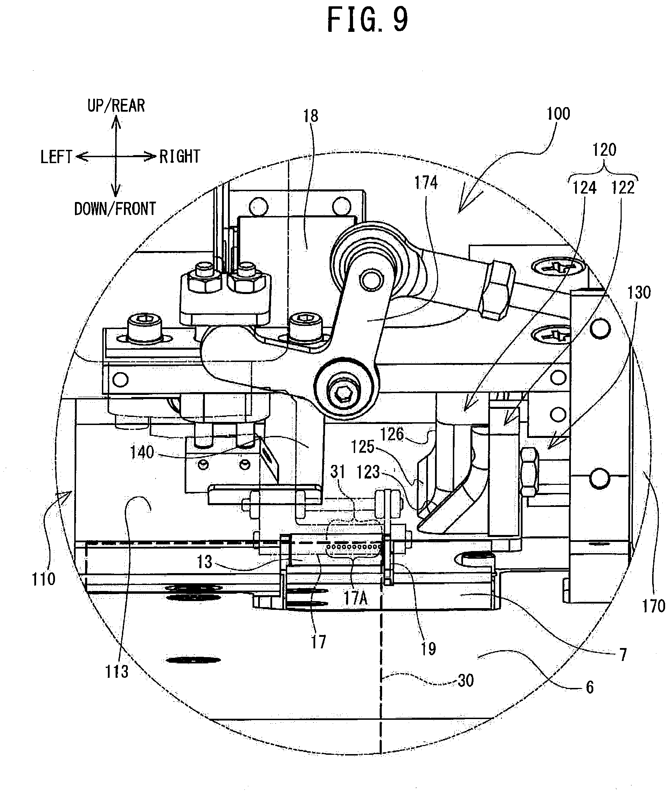

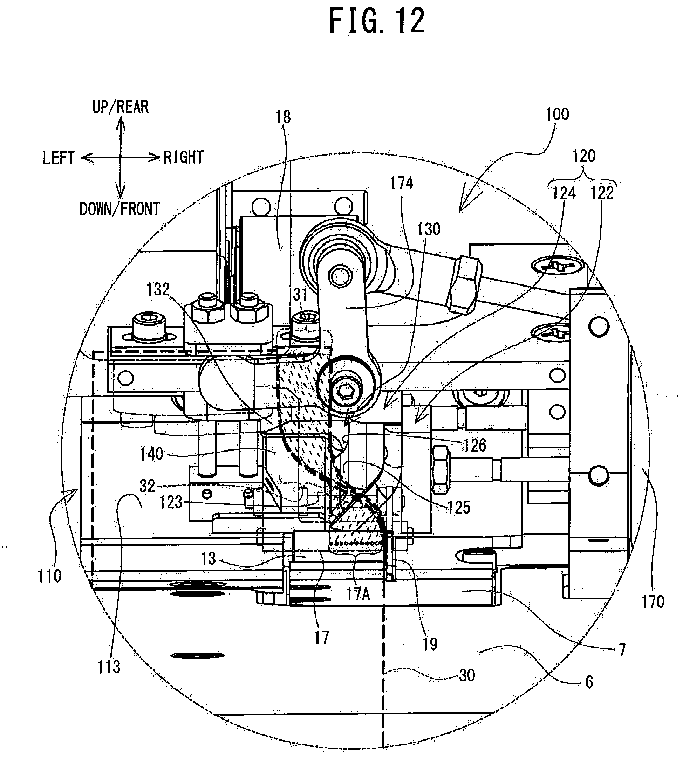

An embodiment of the present invention will be explained with reference to the drawings. In the following explanation, up and down directions, left and right directions, and front and rear directions as indicated by arrows in the drawings are used. An outline configuration of a cloth bonding device 1 will be explained with reference to FIG. 1 to FIG. 7. While conveying a cloth 30 (refer to FIG. 9) in a conveyance direction, the cloth bonding device 1 applies adhesive to an edge portion 31 of the cloth 30 and folds the edge portion 31 back. The cloth bonding device 1 pressure bonds the edge portion 31 with a facing portion 32 (refer to FIG. 12), which is a section of the cloth 30 that faces the folded back edge portion 31 in the up-down direction. The conveyance direction of the cloth bonding device 1 is a direction from a front side to a rear side. The front side is an upstream side in the conveyance direction, and the rear side is a downstream side in the conveyance direction.

As shown in FIG. 1 to FIG. 3, the cloth bonding device 1 is provided with a base 2, a pillar 3, an arm 4, a head 5, an auxiliary plate 6, a swinging mechanism 10, an upper conveyance mechanism 9, a lower conveyance mechanism 12, an attachment member 40, and a fold-back mechanism 100. The base 2 is a substantially cuboid shape and is a base for the cloth bonding device 1. The left side surface of the base 2 is an attachment surface 2A. The attachment surface 2A fixes the attachment member 40 to the left side of the base 2. The attachment member 40 determines the position of and fixes the lower conveyance mechanism 12 in the left-right direction, and attaches the lower conveyance mechanism 12 to the base 2. The auxiliary plate 6 is fixed to the top portion of the lower conveyance mechanism 12. The auxiliary plate 6 has a substantially rectangular shape in a plan view, and a front end portion, and the left and right end portions of the auxiliary plate 6 are bent downward. The top surface of the auxiliary plate 6 is a horizontal plane, and the cloth 30, which is an object to be bonded, is placed on the top surface of the auxiliary plate 6.

The pillar 3 extends in a columnar shape vertically upward from the right end side of the top surface of the base 2. The arm 4 is connected to the upper end of the pillar 3. The arm 4 extends in the left-right direction. The left end of the arm 4 extends further to the left than the left side surface of the pillar 3. The head 5 is provided on the left end of the arm 4. The head 5 is a substantially cuboid shape, and protrudes to the left. The head 5 protrudes further to the left than the base 2.

A pump portion (not shown in the drawings), a reservoir portion 8, the upper conveyance mechanism 9, the swinging mechanism 10 and the like are provided inside the head 5. The pump portion is provided to the right and to the front of the head 5. The reservoir portion 8 is provided to the rear of the pump portion. The reservoir portion 8 is a substantially cuboid shape and is positioned to the rear right end side of the head 5. The reservoir portion 8 extends in the up-down direction and is a cylindrically-shaped bottomed body whose upper portion is open. The reservoir portion 8 is provided with a lid portion 8A. The lid portion 8A is provided on the upper portion of the reservoir portion 8, and covers the opening of the upper portion of the reservoir portion 8. The reservoir portion 8 stores the adhesive in a storage portion (not shown in the drawings) inside the reservoir portion 8. The reservoir portion 8 is provided with heaters 24 on both sides of the storage portion. The heaters 24 heat the storage portion. The adhesive is a hot melt adhesive, and is melted and liquefied by the heaters 24.

The pump portion is provided with a supply passage, a gear pump, a pump motor and the like (not shown in the drawings). The supply passage leads the adhesive from the reservoir portion 8 to the gear pump. The gear pump is provided inside the head 5. The gear pump sucks up an appropriate amount of the adhesive from the reservoir portion 8 and accurately supplies the adhesive to the nozzle 17. The pump motor is provided inside the arm 4. The pump motor drives the gear pump.

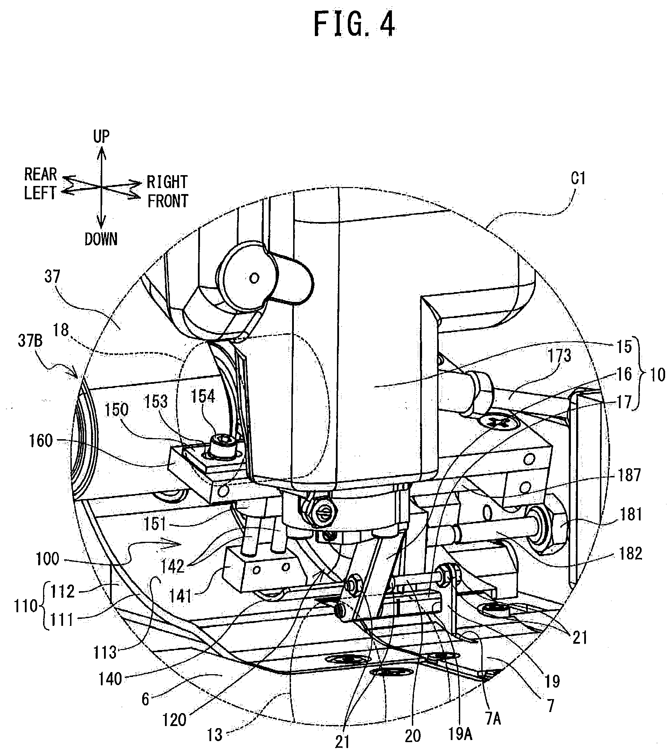

The swinging mechanism 10 is provided on a front portion of the head 5. As shown in FIG. 4 to FIG. 7, the swinging mechanism 10 is provided with the nozzle 17, a nozzle support portion 16, a nozzle lever 15, and a positioning plate 19. The nozzle 17 is substantially rod shaped and extends in the left-right direction. A plurality of discharge outlets 17A, which discharge the adhesive, are provided in a bottom surface of the nozzle 17, and the bottom surface faces downward and rearward. The discharge outlets 17A are openings that are aligned in the left-right direction in a section of the nozzle 17 to the right side from substantially the center, in the left-right direction, of the nozzle 17. The nozzle 17 is positioned higher than a feed roller 13 on the upstream side in the conveyance direction. The length of the nozzle 17 in the left-right direction is longer than the width of the feed roller 13 in the left-right direction.

The positioning plate 19 determines the position of the edge on the right side of the cloth 30 during the cloth bonding. The positioning plate 19 has a substantially rectangular plate shape and is provided on the right end portion of the nozzle 17, and a plate surface of the positioning plate 19 faces in the left-right direction. The positioning plate 19 has an opening 19A that has substantially the same shape as an outer contour of the nozzle 17. The right end portion of the nozzle 17 is inserted through the opening 19A. The left surface of the positioning plate 19 is positioned in the vicinity of the right side of the discharge outlets 17A. A gap D1 in the left-right direction between the left surface of the positioning plate 19 and the discharge outlet 17A at the right end is smaller than a gap D2 between two of the discharge outlets 17A in the left-right direction. By determining the position of the edge of the cloth 30 using the positioning plate 19, the nozzle 17 can maintain a uniform positional relationship between an application position of the adhesive and the edge of the cloth 30.

The upper portion on the front side of the positioning plate 19 protrudes upward and a screw 20 that extends in the left-right direction is inserted therethrough. The right end portion of the screw 20 is fixed to the positioning plate 19 using two nuts 21. The left end portion of the screw 20 is inserted through the nozzle support portion 16 in the left-right direction, and is fixed to the nozzle support portion 16 by two more of the nuts 21. The nozzle support portion 16 supports the left end portion of the nozzle 17. A size of the gap D1 between the left surface of the positioning plate 19 and the discharge outlet 17A of the nozzle 17 can be adjusted by moving tightening positions of the nuts 21 with respect to the screw 20 in the left-right direction. Specifically, the positioning plate 19 can change the application position of the adhesive applied to the edge portion 31 of the cloth 30. An operator can adjust the gap D1 between the left surface of the positioning plate 19 and the discharge outlet 17A in accordance with the material, the thickness and so on of the cloth 30.

The lower end portion of the positioning plate 19 engages with a groove portion 7A in the top surface of a guide plate 7. The guide plate 7 is provided above the auxiliary plate 6, and is positioned to the front and to the right of the feed roller 13. The guide plate 7 is provided such that it can move to the left and to the right, and is fixed by screws to the top surface of a support portion 70 of the lower conveyance mechanism 12. The groove portion 7A extends in the front-rear direction in the guide plate 7 in a position corresponding to the feed roller 13. When the position of the positioning plate 19 with respect to the nozzle 17 is changed in the left-right direction, the guide plate 7 moves in the left-right direction in accordance with the position of the positioning plate 19.

The nozzle support portion 16 extends to the front and upward from the left end portion of the nozzle 17, and is internally provided with a flow passage for the adhesive. The nozzle lever 15 is arm-shaped and extends downward from a base end portion to a leading end portion on the left side of the front portion of the head 5. The nozzle lever 15 can swing in the front-rear direction around a rotating shaft (not shown in the drawings) provided inside the head 5. The rotating shaft extends in the left-right direction. The right end of the rotating shaft is connected to the pump portion, and the left end of the rotating shaft supports the nozzle lever 15. The rotating shaft is internally provided with a flow passage for the adhesive. The base end portion of the nozzle lever 15 is provided on the front left end side inside the head 5. The leading end portion of the nozzle lever 15 is oriented downward. The upper end of the nozzle support portion 16 is fixed to the leading end portion of the nozzle lever 15. The nozzle lever 15 is internally provided with a flow passage for the adhesive and a heater (not shown in the drawings) is provided in the vicinity of the flow passage. The flow passages of the rotating shaft, the nozzle lever 15 and the nozzle support portion 16 cause the adhesive supplied by the gear pump to flow toward the nozzle 17. A nozzle gap is formed between the nozzle 17 and the surface of the feed roller 13. The nozzle gap is a gap for securing an appropriate distance for applying the adhesive discharged from the nozzle 17 onto the top surface of the cloth 30 that is the object to be bonded. At the time of the cloth bonding, the edge portion 31 of the cloth 30 whose right end position has been determined by the positioning plate 19 passes between the nozzle 17 and the surface of the feed roller 13 before being folded back. As a result, a constant distance is secured between the nozzle 17 and the top surface of the edge portion 31 of the cloth 30, and the adhesive is uniformly applied to the edge portion 31.

As shown in FIG. 1 to FIG. 3, the upper conveyance mechanism 9 is provided below the head 5. The upper conveyance mechanism 9 is provided with a support portion 37, a conveyance roller 18, a conveyance motor (not shown in the drawings) and the like. A base end portion 37A of the support portion 37 is provided on a lower portion of the head 5. The support portion 37 extends to the front from the base end portion 37A and bends downward, and then extends diagonally to the front and downward toward a leading end portion 37B. The leading end portion 37B is provided with the conveyance roller 18 (refer to FIG. 4 to FIG. 6). The conveyance roller 18 is positioned on the right surface side of the leading end portion 37B. The conveyance roller 18 rotates around a rotating shaft (not shown in the drawings) that extends in the left-right direction. The rotating shaft protrudes into the interior of the leading end portion 37B. The leading end portion 37B rotatably supports the rotating shaft.

The conveyance motor is provided on the rear upper side inside the head 5. The motive power of the conveyance motor is transmitted to the conveyance roller 18 by a plurality of pulleys, belts and the like (not shown in the drawings) provided inside the support portion 37.

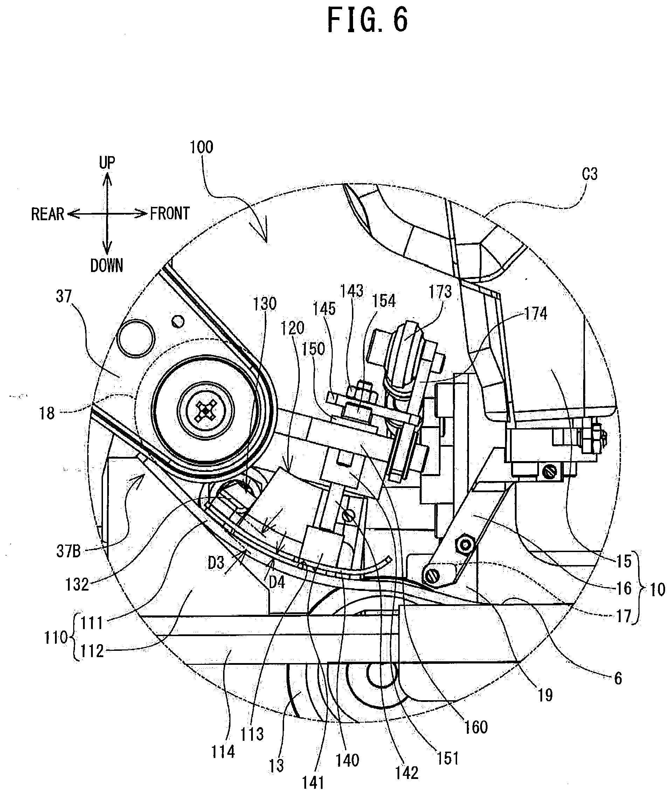

A support shaft 46, whose axial direction is the left-right direction, is provided below a rear left end side of the head 5. The head 5 supports the base end portion 37A of the support portion 37 using the support shaft 46, and the leading end portion 37B can swing in the up-down direction. The head 5 is internally provided with an air cylinder (not shown in the drawings). The air cylinder is driven by the pressure of air fed by a compressor, and presses the leading end portion 37B of the support portion 37 downward. The air cylinder maintains a state (refer to FIG. 6) in which the conveyance roller 18 is in contact with the top surface of the rear end portion of a conveyance base 110. The conveyance base 110 is provided to the rear of the auxiliary plate 6. A position at which the conveyance roller 18 is in contact with the top surface of the conveyance base 110 is a pressure bonding position. The conveyance roller 18 clamps and pressure bonds the cloth 30, which is the object to be bonded, at the pressure bonding position, and conveys the cloth 30 in the conveyance direction.

The lower conveyance mechanism 12 is provided in a position to the left of the base 2 and below and to the front of the head 5. The lower conveyance mechanism 12 is substantially L-shaped in both a front view and a left side view. The lower conveyance mechanism 12 is provided with a motor housing portion 51, a feed motor (not shown in the drawings), the support portion 70, and the feed roller 13. The motor housing portion 51 is a substantially cuboid box body that extends in the left-right direction, and internally houses the feed motor. The feed motor is disposed inside the motor housing portion 51 such that the axial direction of an output shaft of the feed motor is the left-right direction. The output shaft of the feed motor protrudes to the left from the left wall of the motor housing portion 51.

The support portion 70 is a hollow shaped box body that extends in the front-rear direction, and a base end portion 70A thereof bends downward. The right wall of the base end portion 70A is integrally provided with the left wall of the motor housing portion 51. The output shaft of the feed motor protrudes into the interior of the base end portion 70A. A leading end portion 70B of the support portion 70 is positioned above and to the rear of the base end portion 70A. The leading end portion 70B is provided with the feed roller 13. The feed roller 13 is provided substantially in the center, in the left-right direction, of the leading end portion 70B. The feed roller 13 rotates around a rotating shaft (not shown in the drawings) that extends in the left-right direction. The rotating shaft protrudes into the interior of the leading end portion 70B. The leading end portion 70B rotatably supports the rotating shaft. The axial direction of the rotating shaft of the feed roller 13 is parallel to the axial direction of the rotating shaft of the conveyance roller 18, and is orthogonal to the conveyance direction. The motive power of the feed motor is transmitted to the feed roller 13 by a plurality of pulleys, belts and the like (not shown in the drawings) provided inside the support portion 70.

The lower conveyance mechanism 12 is attached to the attachment surface 2A of the base 2 using the attachment member 40. The attachment member 40 is provided with a fixing portion 41 and a holding portion 42. The fixing portion 41 is substantially L-shaped in a left side view and is thick in the left-right direction, and the front side of the lower portion of the fixing portion 41 extends to the front. The fixing portion 41 is fixed to the attachment surface 2A. The holding portion 42 extends to the left from the front end portion of the fixing portion 41. The holding portion 42 is substantially L-shaped in a front view. The right end portion of the holding portion 42 is a rectangular cylindrical shape and the left end portion of the holding portion 42 is a substantially U-shaped groove in a left side view. The motor housing portion 51 is placed on the top surface of the bottom portion of the holding portion 42. The holding portion 42 has long holes 42A that extend in the left-right direction in the front wall and the bottom wall of the left end portion of the holding portion 42. The holding portion 42 fixes the lower conveyance mechanism 12, by screws that are passed through the long holes 42A being tightened into screw holes provided in the front wall and the bottom wall of the motor housing portion 51.

The lower conveyance mechanism 12 is assembled onto the cloth bonding device 1 in a state in which the support portion 70 is oriented in the front-rear direction such that the feed roller 13 is positioned to the rear. The auxiliary plate 6 is assembled onto the top surface of the support portion 70 using a fixing member 114. The fixing member 114 is provided in an intermediate portion of the support portion 70 between the leading end portion 70B and the base end portion 70A, and the top surface of the fixing member 114 extends in the front-rear direction on both the left and right sides of the support portion 70. The rear end portion of the fixing member 114 protrudes further to the rear than the rear end of the auxiliary plate 6. The feed roller 13 is positioned on the front end portion of the conveyance base 110, which is provided to the rear of the auxiliary plate 6. The upper portion of the feed roller 13 is exposed above the top surface of the front end portion of the conveyance base 110 (refer to FIG. 6). The surface of the upper portion of the feed roller 13 faces the bottom surface of the lower portion of the nozzle 17. The lower conveyance mechanism 12 can change fastening positions of the screws that fix the motor housing portion 51 to the holding portion 42, in the left-right direction over a range of the long holes 42A. The auxiliary plate 6 and the conveyance base 110 move in the left-right direction of the lower conveyance mechanism 12 in accordance with the position of the motor housing portion 51 with respect to the holding portion 42.

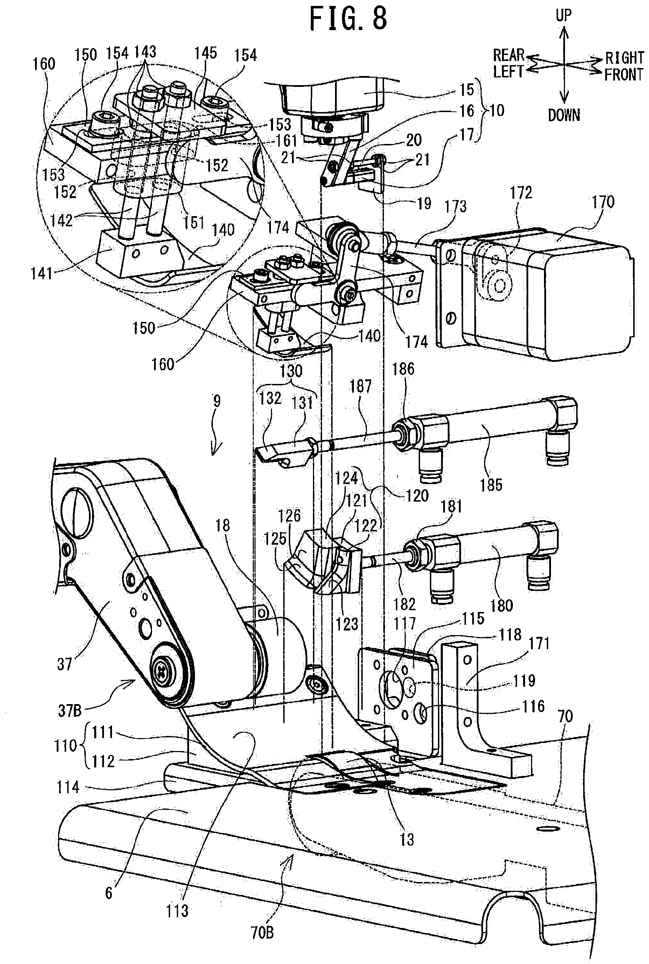

The structure of the fold-back mechanism 100 will be explained with reference to FIG. 4 to FIG. 6 and FIG. 8. The fold-back mechanism 100 is provided with the conveyance base 110, an upward folding portion 120, a lateral folding portion 130, air cylinders 180 and 185, a presser plate 140, an up-and-down support portion 150, a presser support portion 160, and a drive portion 170. The conveyance base 110 is a pedestal-shaped part in which a foundation portion 112, which is a substantially triangular shape in a side view, supports a plate-shaped base plate 111 that extends in the front-rear direction and the left-right direction. The foundation portion 112 supports the base plate 111 such that the rear end portion.of the base plate 111 is positioned higher than the front end portion of the base plate 111. The base plate 111 is inclined upward from the front end portion to the rear end portion. The foundation portion 112 is provided on the rear end portion of the fixing member 114. The top surface of the base plate 111 is contiguous to the top surface of the auxiliary plate 6 in the front-rear direction. The top surface of the base plate 111 between the front-end portion and the rear end portion is provided with a curved surface 113 that is curved downward. The top surface of the front end portion of the base plate 111 is curved upward in line with the top portion surface of the feed roller 13. In a side view, the top surface of the rear end portion of the base plate 111 extends in a straight line upward and to the rear from the rear end of the curved surface 113.

The lower portion on the right side of the foundation portion 112 protrudes further to the right than the base plate 111. The lower end portion of an attachment plate 115 is fixed to the section of the foundation portion 112 that protrudes to the right. The attachment plate 115 is a substantially rectangular plate member and a plate surface thereof is oriented in the left-right direction. The attachment plate 115 has through holes 116 and 117 that penetrate the attachment plate 115 in the left-right direction. The left end portion of the air cylinder 180 is positioned inside the through hole 116. A nut 181 is fastened onto the left end portion of the air cylinder 180, and thus attaches the air cylinder 180 to the attachment plate 115. A rod 182 of the air cylinder 180 protrudes to the left side of the attachment plate 115, and can move in the left-right direction. The left end of the rod 182 is connected to the upward folding portion 120.

A rectangular shaped attachment plate 118 that is smaller than the attachment plate 115 is provided to the right side of the attachment plate 115. The attachment plate 118 is fixed to the attachment plate 115 with a gap between the attachment plate 118 and the attachment plate 115. The attachment plate 118 has a through hole 119 that penetrates the attachment plate 118 in the left-right direction. The left end portion of the air cylinder 185 is positioned inside the through hole 119. A nut 186 is fastened onto the left end portion of the air cylinder 185, and thus attaches the air cylinder 185 to the attachment plate 118. A rod 187 of the air cylinder 185 protrudes to the left side of the attachment plate 115 via the through hole 117, and can move in the left-right direction. The left end of the rod 187 is connected to the lateral folding portion 130.

The upward folding portion 120 is positioned to the rear of the feed roller 13, and is disposed above the curved surface 113 of the conveyance base 110. The upward folding portion 120 is provided with a fixing portion 121, a front side inclined portion 122, and a rear side inclined portion 124. The fixing portion 121 has a substantially rectangular plate shape and is fixed to the left end of the rod 182. The bottom surface of the fixing portion 121 is curved downward in line with the curved surface 113 of the conveyance base 110. The front side inclined portion 122 is fixed to the left surface on the front side of the fixing portion 121. The bottom surface of the front side inclined portion 122 is curved downward in line with the curved surface 113. The left surface of the front side inclined portion 122 forms an inclined surface 123. The inclined surface 123 is inclined from the lower left to the upper right. The inclined surface 123 is inclined at an acute angle with respect to the curved surface 113.

The rear side inclined portion 124 is fixed to the left surface on the rear side of the fixing portion 121. The bottom surface of the rear side inclined portion 124 is curved downward in line with the curved surface 113. The left surface of the rear side inclined portion 124 forms inclined surfaces 125 and 126. The inclined surfaces 125 and 126 are inclined from the lower left to the upper right. The inclined surfaces 125 and 126 are inclined at acute angles with respect to the curved surface 113. The inclined surface 126 is positioned above the inclined surface 125 and is connected to the inclined surface 125 in the up-down direction. An angle of inclination of the inclined surface 125 with respect to the curved surface 113 is the same angle as an angle of inclination of the inclined surface 123 with respect to the curved surface 113. An angle of inclination of the inclined surface 126 with respect to the curved surface 113 is larger than the angles of inclination of the inclined surfaces 123 and 125 with respect to the curved surface 113, and is substantially a right angle. The inclined surface 126 is positioned further to the left than the right end portion of the inclined surface 123.

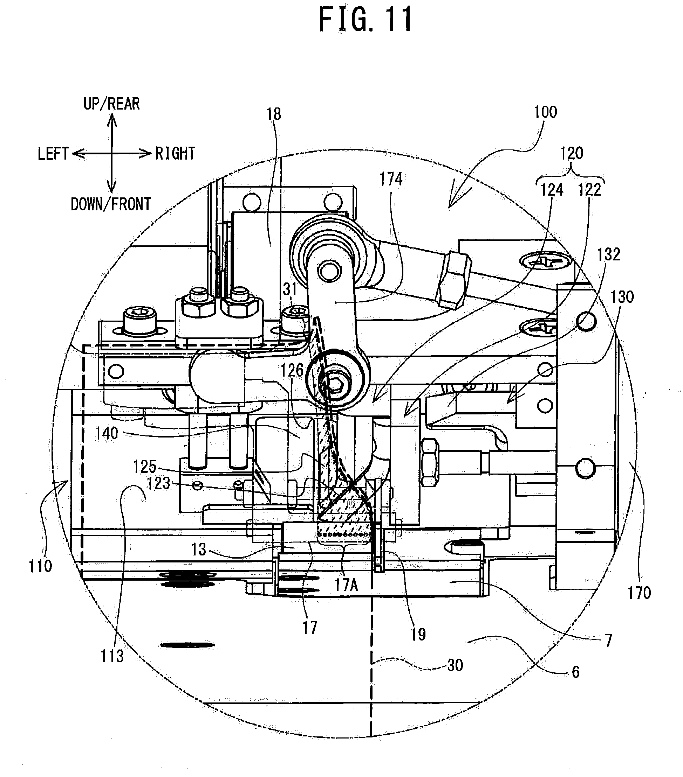

The upward folding portion 120 moves in the left-right direction between a folding position and a retreat position, in accordance with the driving of the air cylinder 180. The folding position is a position above the conveyance path of the cloth 30, to the rear of the feed roller 13 (refer to FIG. 11). The retreat position is a position to the rear and to the right of the feed roller 13, in which the upward folding portion 120 has retreated to the right from above the conveyance path of the cloth 30 (refer to FIG. 9). When the upward folding portion 120 moves from the retreat position to the folding position, the upward folding portion 120 scoops up the edge of the right side of the cloth 30 from the curved surface 113, and folds the edge portion 31 upward.

The lateral folding portion 130 is positioned to the rear of the feed roller 13 and to the rear of the upward folding portion 120, and is positioned above the curved surface 113 of the conveyance base 110. The lateral folding portion 130 is positioned further to the upstream side in the conveyance direction than the pressure bonding position. The front surface of the lateral folding portion 130 and the rear surface of the upward folding portion 120 are in close proximity to each other. The lateral folding portion 130 is provided with a main body portion 131 and a protruding portion 132. The main body portion 131 has a substantially rectangular shape in a plan view and extends in a columnar shape in the left-right direction. The bottom surface of the main body portion 131 is curved downward in line with the curved surface 113. The protruding portion 132 protrudes to the left from the upper portion on the left side of the main body portion 131. The length of the protruding portion 132 in the left-right direction is substantially the same as the length of the main body portion 131 in the left-right direction.

The lateral folding portion 130 moves in the left-right direction between the folding position (refer to FIG. 12) and the retreat position (refer to FIG. 9) in accordance with the driving of the air cylinder 185. When the lateral folding portion 130 moves from the retreat position to the folding position, the lateral folding portion 130 uses the protruding portion 132 to fold back, to the left, the edge portion 31 of the cloth 30 that has been folded upward by the upward folding portion 120. When the upward folding portion 120 and the lateral folding portion 130 are positioned in the folding position, the positions of the lower left ends of the inclined surfaces 123 and 125 and the position of the left surface of the main body portion 131 are substantially in the same position in the left-right direction.

A gap D3 is formed between the protruding portion 132 and the curved surface 113 (refer to FIG. 6). The size of the gap D3 is greater than a two-fold thickness of the cloth 30. When folding back the edge portion 31 of the cloth 30, the adhesive applied to the edge portion 31 is located on the inside of the folded back section. As a result of the gap D3, the protruding portion 132 inhibits the edge portion 31 from coming into contact with the presser plate 140 that faces the folded-back edge portion 31 in the up-down direction. The size of the gap D3 is smaller than the width, in the left-right direction, of the edge portion 31 of the cloth 30. Thus, the protruding portion 132 can press and fold the edge portion 31 of the cloth 30, which has been folded upward by the upward folding portion 120, from the right side and thus fold back the edge portion 31 to the left. At this time, the edge portion 31 of the cloth 30 comes into contact with the bottom surface of the protruding portion 132.

The presser plate 140 is positioned to the rear of the feed roller 13 and to the left of the upward folding portion 120 and the lateral folding portion 130, and above the curved surface 113 of the conveyance base 110. The presser plate 140 extends in the front-rear direction, and is a plate-shaped member that is curved downward in line with the curved surface 113. The front end portion of the presser plate 140 is bent upward. The rear end portion of the presser plate 140 is positioned further to the upstream side in the conveyance direction than the pressure bonding position. The position of the rear end portion of the presser plate 140 in the conveyance direction is substantially the same position as the rear end of the lateral folding portion 130. The right end of the presser plate 140 extends in a straight line in the front-rear direction. When the upward folding portion 120 and the lateral folding portion 130 are positioned in the folding position, the lower left ends of the inclined surfaces 123 and 125 of the upward folding portion 120 and the left surface of the main body portion 131 of the lateral folding portion 130 are positioned to the right of the presser plate 140, and are aligned in the front-rear direction along the right end of the presser plate 140.

A pedestal-shaped base stand portion 141 is fixed to the top surface of the presser plate 140. The base stand portion 141 is connected to the bottom end portions of a pair of presser bars 142. The pair of presser bars 142 extend in the up-down direction and are aligned in the left-right direction. The up-and-down support portion 150 is a plate-shaped member that extends in the left-right direction. A protruding portion 151, which protrudes downward, is provided in substantially the center of the bottom surface of the up-and-down support portion 150. The protruding portion 151 is substantially elliptically shaped in a plan view, and extends in the up-down direction. The up-and-down support portion 150 has a pair of hole portions 152, which penetrate the up-and-down support portion 150 in the up-down direction in a position at which the protruding portion 151 is formed, and which are aligned in the left-right direction. The pair of presser bars 142 are inserted through the pair of hole portions 152. The up-and-down support portion 150 has a pair of long hole portions 153, which penetrate, in the up-down direction, plate-shaped sections on the left side and the right side of the protruding portion 151. Each of the pair of long hole portions 153 opens in an elliptical shape that extends in the left-right direction.

A transmission plate 145 is fastened to the upper end portions of the pair of presser bars 142 using screws 143. The screws 143 clamp the transmission plate 145 from above and below. The transmission plate 145 has a substantially rectangular shape in a plan view, and the front end side of the transmission plate 145 protrudes further to the front than the up-and-down support portion 150. The up-and-down support portion 150 supports the presser plate 140, the base stand portion 141, the presser bars 142 and the transmission plate 145 such that these members can move in the up-down direction. When the transmission plate 145 moves upward as a result of the driving force of the drive portion 170, the presser plate 140 moves upward. The presser plate 140 moves downward as a result of the weight of the presser plate 140, the base stand portion 141, the presser bars 142 and the transmission plate 145. A range over which the presser plate 140 can move in the up-down direction is a range between a position in which the top surface of the base stand portion 141 is in contact with the bottom surface of the protruding portion 151, and a position in which the screws 143 positioned on the bottom surface side of the transmission plate 145 are in contact with the top surface of the up-and-down support portion 150.

The up-and-down support portion 150 is fixed to the presser support portion 160. The presser support portion 160 is a member formed by two substantially L-shaped plate-shaped members being connected to each other in the up-down direction. The upper side member is thick in the up-down direction, and has a section that extends to the left from a bent section and a section that extends to the rear from the bent section. The lower side member is thick in the left-right direction, and has a section that extends to the front from a bent section and a section that extends downward from the bent section. The bent section of the lower side member is positioned on an end portion of the section of the upper side member that extends to the rear. The section of the upper side member that extends to the rear is connected, in the up-down direction, to the section of the lower side member that extends to the front. The lower end portion of the up-and-down support portion 150 is fixed to the upper side of a section protruding to the right on the right end portion of the foundation portion 112 of the conveyance base 110.

The left end portion of the presser support portion 160 has a long hole portion 161 that penetrates in the up-down direction. The long hole portion 161 opens in an elliptical shape that extends in the left-right direction. The protruding portion 151 of the up-and-down support portion 150 is inserted inside the long hole portion 161, and the bottom surfaces of the plate-shaped sections are in contact with the top surface of the presser support portion 160. The length in the left-right direction of the long hole portion 161 is longer than the length in the left-right direction of the protruding portion 151 of the up-and-down support portion 150. Screws 154 that are inserted through the long hole portions 153 are fastened to the presser support portion 160, and the up-and-down support portion 150 is thus fixed to the presser support portion 160. A position at which the up-and-down support portion 150 is fixed to the presser support portion 160 can be changed in the left-right direction within the ranges of the long hole portions 153 and the long hole portion 161. Specifically, the position of the presser plate 140 in the left-right direction can be adjusted in accordance with the position at which the up-and-down support portion 150 is fixed to the presser support portion 160. A fold-back width of the edge portion 31 of the cloth 30 can be adjusted by changing the position of the presser plate 140 in the left-right direction.

The drive portion 170 is a pulse motor. The auxiliary plate 6 is provided with a motor fixing portion 171 that extends upward and that is provided to the right of the feed roller 13. The motor fixing portion 171 is substantially L-shaped in a side view. The drive portion 170 is screwed to the motor fixing portion 171 and is fixed onto the auxiliary plate 6. One end portion of an elliptical plate-shaped link member 172 is provided on an output shaft of the drive portion 170. The other end portion of the link member 172 is connected to one end portion of a rod-shaped link member 173. The other end portion of the link member 173 is connected to one end portion of an L plate-shaped cam member 174. The one end portion of the cam member 174 is positioned above a bent section of the cam member 174, and the other end portion is positioned to the left of the bent section. The front surface of the upper side member of the presser support portion 160 rotatably supports the bent section of the cam member 174. The other end portion of the cam member 174 is in contact with the bottom surface of the transmission plate 145. The drive portion 170 pushes the transmission plate 145 upward via the link members 172 and 173 and the cam member 174. Specifically, the drive portion 170 can move the presser plate 140 in the up and down directions over a movable range, in accordance with a rotation position of the output shaft.

At the time of the cloth bonding, the drive portion 170 controls a rotation of the output shaft and moves the presser plate 140 to an upper end position, a lower end position and an intermediate position within the range over which the presser plate 140 can move in the up-down direction. The upper end position is a position in which a gap between the bottom surface of the presser plate 140 and the curved surface 113 is larger than a folded width of the edge portion 31 of the cloth 30. The lower end position is a position in which the bottom surface of the presser plate 140 is in contact with the curved surface 113. The intermediate position is between the upper end position and the lower end position, and is a position at which a predetermined gap D4 (refer to FIG. 6) is formed between the bottom surface of the presser plate 140 and the curved surface 113. The drive portion 170 can change the size of the gap D4 in accordance with the thickness of the cloth 30. The size of the gap D4 is set to be slightly larger than the thickness of the cloth 30. At the time of the cloth bonding, the presser plate 140 allows the cloth 30 to smoothly pass through the gap D4 and at the same time, the presser plate 140 can inhibit the cloth 30 from lifting from the curved surface 113 as a result of the tension of the cloth 30.

The cloth bonding device 1 operates in the following manner at the time of cloth bonding. The leading end portion of the nozzle lever 15 swings downward and a state is obtained in which there is a nozzle gap between the discharge outlets 17A of the nozzle 17 and the surface of the feed roller 13. The drive portion 170 pushes the transmission plate 145 upward, thus moving the presser plate 140 to the upper end position. The rod 182 of the air cylinder 180 moves to the right, thus moving the upward folding portion 120 to the retreat position. The rod 187 of the air cylinder 185 moves to the right, thus moving the lateral folding portion 130 to the retreat position.

As shown in FIG. 9, the operator uses the positioning plate 19 to determine the position of the right end of the cloth 30, and disposes the edge of the cloth 30 on the downstream side in the conveyance direction between the discharge outlets 17A of the nozzle 17 and the surface of the feed roller 13. The pump motor drives the gear pump, and the gear pump supplies the adhesive heated by the heaters 24 from the reservoir portion 8 to the nozzle 17. The nozzle 17 discharges the adhesive from the discharge outlets 17A, and applies the adhesive to the edge portion 31 on the right side of the cloth 30.

The lower conveyance mechanism 12 rotates the feed roller 13 in the counterclockwise direction in a left side view, and feeds the cloth 30 to the downstream side in the conveyance direction. Since the presser plate 140 is in the upper end position, the lower conveyance mechanism 12 smoothly conveys the cloth 30 without any conveyance resistance being applied to the cloth 30. The nozzle 17 applies a constant application amount of the adhesive onto the edge portion 31, while maintaining an even application resistance with respect to the cloth 30. The lower conveyance mechanism 12 disposes the edge of the cloth 30 on the downstream side in the conveyance direction between the presser plate 140 and the pressure bonding position, in the conveyance direction.

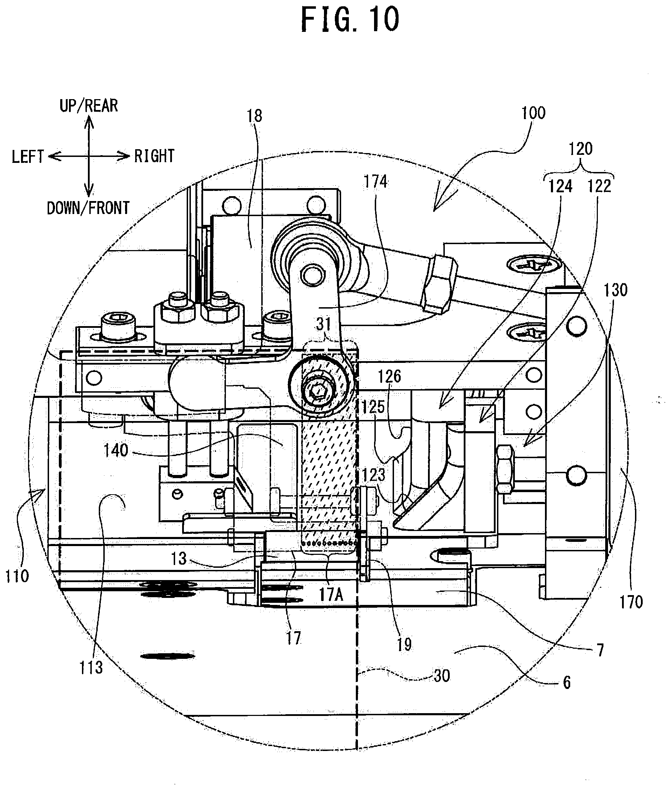

As shown in FIG. 10, the drive portion 170 rotates the cam member 174 in the counterclockwise direction in a front view, thus moving the presser plate 140 to the lower end position. The presser plate 140 clamps and holds, between the presser plate 140 and the curved surface 113, a section of the cloth 30 further to the left than the edge portion 31 of the cloth 30.

As shown in FIG. 11, the air cylinder 180 moves the upward folding portion 120 to the folding position. The lower ends of the inclined surface 123 of the front side inclined portion 122 and the inclined surface 125 of the rear side inclined portion 124 enter between the curved surface 113 and the edge on the right side of the bottom surface of the cloth 30, and scoop up the edge portion 31 up from the curved surface 113. The front side inclined portion 122 and the rear side inclined portion 124 fold the edge portion 31 of the cloth 30 upward along the inclined surfaces 123 and 125. The inclined surface 126 of the rear side inclined portion 124 is inclined at a greater angle than the inclined surface 123. Of the edge portion 31, a section that comes into contact with the inclined surface 123 forms a gently curved surface and is folded upward, while a section that comes into contact with the inclined surface 126 forms a more sharply curved surface and is folded upward. In the cloth 30, the size of the fold of the edge portion 31 in the upward direction from the horizontal direction becomes larger from the upstream side to the downstream side in the conveyance direction.

As shown in FIG. 12, the air cylinder 185 moves the lateral folding portion 130 to the folding position. The protruding portion 132 of the lateral folding portion 130 presses and folds the edge portion 31, which has been folded upward, from the right side and thus folds back the edge portion 31 to the left. The bottom surface of the protruding portion 132 comes into contact with a non-adhesion surface that is on the opposite side to an adhesion surface of the edge portion 31 to which the adhesive is adhered. The adhesion surface of the edge portion 31 faces the top surface of the facing portion 32 of the cloth 30 with the presser plate 140 interposed therebetween.

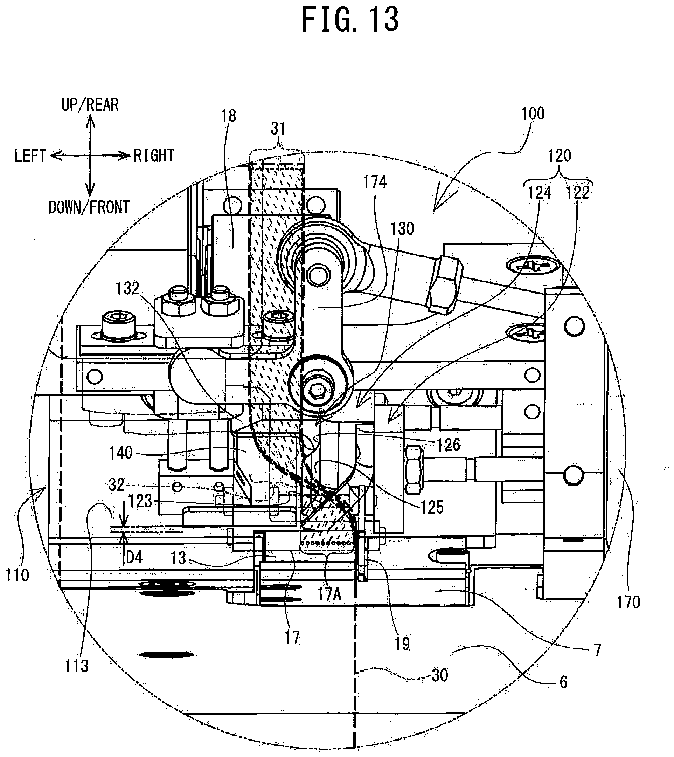

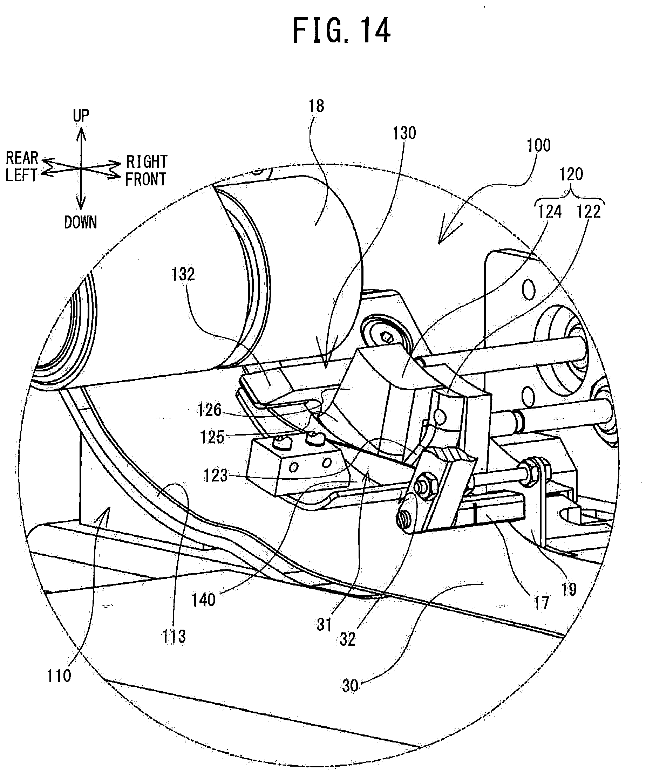

As shown in FIG. 13 and FIG. 14, the drive portion 170 rotates the cam member 174 in the clockwise direction in a front view, thus moving the presser plate 140 to the intermediate position. The presser plate 140 forms the gap D4, which is larger than the thickness of the cloth 30, between the presser plate 140 and the curved surface 113, and thus releases the holding of the cloth 30. The lower conveyance mechanism 12 rotates the feed roller 13 in the counterclockwise direction in a left side view, and conveys the cloth 30 to the downstream side in the conveyance direction. The presser plate 140 inhibits the cloth 30 from lifting up from the curved surface 113. The edge of the cloth 30 on the downstream side in the conveyance direction reaches the pressure bonding position between the conveyance roller 18 and the conveyance base 110. The conveyance roller 18 rotates in the clockwise direction in a left side view, clamps the cloth 30 between the conveyance roller 18 and the conveyance base 110, and conveys the cloth 30 to the downstream side in the conveyance direction. The conveyance roller 18 and the conveyance base 110 press the edge portion 31 and the facing portion 32 in the up-down direction at the pressure bonding position, and pressure bond the edge portion 31 and the facing portion 32 using the adhesive adhered to the edge portion 31.

At the time of the cloth bonding, by the edge portion 31 being folded back on the curved surface 113, the cloth 30 can cancel out a path difference, on the conveyance path, between the facing portion 32 and the edge portion 31. Thus, a force that aims to return the folded-back section to its original state cannot easily act on the edge portion 31 of the cloth 30. The cloth bonding device 1 can pressure bond the edge portion 31 and the facing portion 32 in a state in which the fold-back width of the edge portion 31 is kept constant.

As described above, the cloth bonding device 1 applies the adhesive to the top surface of the edge portion 31 before folding back the edge portion 31 of the cloth 30. Since the adhesive is only applied to the one surface of the cloth 30, the nozzle 17 can easily control the gap between the nozzle 17 and the cloth 30, and can keep constant the application amount of the adhesive onto the cloth 30. The nozzle 17 can maintain the gap between the nozzle 17 and the cloth 30 to be constant, and thus, over the application range of the adhesive, can maintain the even application resistance with respect to the cloth 30. As a result, the cloth bonding device 1 can smoothly finish the edge portion 31 of the cloth 30 after bonding. The adhesive is reliably adhered to the edge portion 31 before the folding back, and thus, at the time of pressure bonding, the adhesive does not ooze out from the end of the edge portion 31, nor is there a case in which the adhesive does not reach the end of the edge portion 31.

When the cloth 30 is set on the fold-back mechanism 100, the upward folding portion 120 and the lateral folding portion 130 are positioned in the retreat position. The upward folding portion 120 moves to the folding position and folds the edge portion 31 of the cloth 30 upward. After the upward folding portion 120 has folded the edge portion 31 upward, the lateral folding portion 130 moves to the folding position and puts the edge portion 31 into a folded back state. Since the upward folding portion 120 and the lateral folding portion 130 are not in the folding position when the cloth 30 is set, the operator can easily set the cloth 30 on the fold-back mechanism 100. The fold-back mechanism 100 folds the edge portion 31 of the cloth 30 in a two-stage process, and can thus reliably fold back the edge portion 31.

When the cloth 30 is set on the fold-back mechanism 100, the cloth 30 is disposed on the conveyance base 110. When the upward folding portion 120 moves from the retreat position to the folding position, the inclined surface 123 of the front side inclined portion 122 and the inclined surface 125 of the rear side inclined portion 124 are inclined at acute angles with respect to the top surface of the conveyance base 110, and thus, the inclined surfaces 123 and 125 can enter under the edge portion 31 from the end of the edge portion 31 of the cloth 30, and can scoop up the edge portion 31. The inclined surface 126 of the rear side inclined portion 124 has a section with a larger angle than that of the inclined surface 123 of the front side inclined portion 122. Thus, the section of the edge portion 31 that comes into contact with the inclined surface 123 of the front side inclined portion 122 forms a gently curved surface and is folded, while the section of the edge portion 31 that comes into contact with the inclined surface 126 of the rear side inclined portion 124 forms a more sharply curved surface and is folded. As a result, the upward folding portion 120 can smoothly fold the edge portion 31 of the cloth 30 while increasing the size of the fold of the edge portion 31 in the upward direction from the horizontal direction, from the upstream side to the downstream side in the conveyance direction.

When the lateral folding portion 130 moves from the retreat position to the folding position, the protruding portion 132 presses and folds the edge portion 31, which has been folded upward by the upward folding portion 120, in the lateral direction and the bottom surface of the protruding portion 132 comes into contact with the non-adhesion surface of the edge portion 31 to which the adhesive is not adhered. The gap between the protruding portion 132 and the top surface of the conveyance base 110 is smaller than the width of the edge portion 31, and thus, the protruding portion 132 can maintain the folded back state of the edge portion 31. The cloth bonding device 1 can convey the cloth 30 between the conveyance roller 18 and the conveyance base 110 in the state in which the fold-back width of the edge portion 31 is maintained to be constant, and can pressure bond the edge portion 31 and the facing portion 32.

When the edge portion 31 is folded back on a horizontal plane, in the cloth 30, a path difference occurs between the facing portion 32 that is conveyed along the conveyance path, and the edge portion 31 that is conveyed along the conveyance path while intersecting the conveyance path at the folded back section. A force that aims to return the folded back section to its original state is applied to the edge portion 31 of the cloth 30 in order to cancel out the path difference. In this case, it is possible that the width of the edge portion 31 after being folded back may become smaller. By folding back the edge portion 31 on the curved surface 113, the cloth 30 can cancel out the path difference between the facing portion 32 and the edge portion 31 on the conveyance path. Thus, it becomes difficult for the force that aims to return the folded back section to its original state to be applied to the edge portion 31 of the cloth 30. The cloth bonding device 1 can pressure bond the edge portion 31 and the facing portion 32 in the state in which the fold-back width of the edge portion 31 is kept constant.

When conveying the cloth 30, the cloth bonding device 1 can hold the facing portion 32 of the cloth 30 between the bottom surface of the presser plate 140 and the curved surface 113 of the conveyance base 110. Thus, the presser plate 140 can inhibit the cloth 30 from lifting up from the curved surface 113 as a result of the tension of the cloth 30. The presser plate 140 can move in the up-down direction, and thus, when the cloth 30 is set on the fold-back mechanism 100, the operator can easily dispose the cloth 30 between the presser plate 140 and the conveyance base 110.

When the cloth 30 is set on the fold-back mechanism 100, the presser plate 140 is positioned in the upper end position. Even if the operator sets the cloth 30 on the fold-back mechanism 100 while applying the adhesive to the edge portion 31 of the cloth 30, the edge portion 31 does not come into contact with the presser plate 140, and the adhesive is not applied to the presser plate 140. When the fold-back mechanism 100 first folds back the edge portion 31 of the cloth 30, the presser plate 140 is positioned in the lower end position. The presser plate 140 clamps the cloth 30 between the presser plate 140 and the conveyance base 110, and can thus inhibit displacement of the cloth 30 at the time of first being folded back. When the fold-back mechanism 100 continues to fold back the edge portion 31 of the cloth 30, the presser plate 140 is positioned in the intermediate position. The facing portion 32 is disposed in the gap between the bottom surface of the presser plate 140 and the curved surface 113 of the conveyance base 110, and thus, the cloth 30 can move smoothly without lifting up.

By moving the position of the presser plate 140 in the left-right direction, the position at which the presser plate 140 holds the facing portion 32 of the cloth 30 is changed in the left-right direction. Thus, the cloth bonding device 1 can adjust the fold-back width of the edge portion 31.

The positioning plate 19 determines the position of the edge of the cloth 30, and thus, the discharge outlets 17A in the vicinity of the positioning plate 19 can reliably apply the adhesive to the end portion of the cloth 30. The cloth bonding device 1 can maintain the positional relationship between the application position of the adhesive and the edge of the cloth 30 to be constant, and can thus improve the bonding quality.

The operator can adjust the distance between the discharge outlet 17A positioned at the right end and the positioning plate 19, in accordance with the material, the thickness and the like of the cloth 30. As a result, the cloth bonding device 1 can maintain the constant positional relationship between the application position of the adhesive and the edge of the cloth 30, and can thus improve the bonding quality.

The feed roller 13 is used to feed the cloth 30, and thus, the application resistance with respect to the cloth 30 can be evenly maintained, and the amount of adhesive applied to the edge portion 31 can be made constant.

With respect to the present invention, in addition to the above-described embodiment, the following various modifications are possible, for example. The upward folding portion 120 and the lateral folding portion 130 are disposed on the right side of the conveyance path of the cloth 30, but they may be disposed on the left side. The position of the positioning plate 19 with respect to the nozzle 17 need not necessarily be changeable in the left-right direction. In this case, the positioning plate 19 may be fixed to the right end portion of the nozzle 17. The positioning plate 19 need not necessarily be provided. In this case, the cloth 30 may be disposed on the fold-back mechanism 100 such that the edge of the cloth 30 is along the groove portion 7A of the guide plate 7, for example. The front side inclined portion 122 and the rear side inclined portion 124 of the upward folding portion 120 may be integrally formed. In this case, the inclined surfaces 123, 125 and 126 may be one continuous surface.

In the fold-back mechanism 100, the upward folding portion 120 and the lateral folding portion 130 may be integrally configured. In this case, the fold-back mechanism 100 may have a shape such that when the upward folding portion 120 and the lateral folding portion 130 move to the folding position, the edge portion 31 of the cloth 30 can be folded upward and folded back to the left.

The drive portion 170 that moves the presser plate 140 to the upper end position, the lower end position and the intermediate position may be configured by two air cylinders, for example. In this case, one of the air cylinders may move the presser plate 140 to the upper end position and the lower end position, and the other air cylinder may move the presser plate 140 to the upper end position and the intermediate position. The position of the presser plate 140 need not necessarily be changeable in the left-right direction. In this case, in the left end portion of the presser support portion 160, the size of the long hole portion 161 may be made substantially the same as that of the protruding portion 151. The presser plate 140 need not necessarily be movable in the up-down direction. In this case, the presser plate 140 may be constantly positioned in the intermediate position.

The feed roller 13 need not necessarily be provided. In this case, the lower conveyance mechanism 12 can be omitted, and the operator may manually convey the cloth 30 to the pressure bonding position between the conveyance roller 18 and the conveyance base 110.

In the above explanation, the left-right direction corresponds to a transverse direction of the present invention, the front side inclined portion 122 corresponds to a first inclined portion of the present invention, the rear side inclined portion 124 corresponds to a second inclined portion of the present invention, the screws 154 correspond to a presser fixing member of the present invention, and the screw 20 and the nuts 21 correspond to a position fixing member of the present invention.

## Claims

1. A cloth bonding device (1) comprising:
a conveyance base (110) extending in a conveyance direction along which a cloth (30) is conveyed;
a nozzle (17) configured to apply adhesive onto a top surface of an edge portion (31), which is an end portion of the cloth in a direction intersecting the conveyance direction;
a fold-back mechanism (100) disposed on a downstream side of the nozzle in the conveyance direction, and configured to fold back the edge portion, to which the adhesive is adhered, in the direction intersecting the conveyance direction; and
a conveyance roller (18) disposed on the downstream side of the fold-back mechanism in the conveyance direction, and configured to convey the cloth, which has been disposed on the conveyance base, in the conveyance direction, the conveyance roller clamping and pressing the edge portion, which has been folded back by the fold-back mechanism, and a facing portion (32), which is a section of the cloth facing the folded back edge portion (31) in the up-down direction between the conveyance roller and the conveyance base, and conveying to the downstream side in the conveyance direction.

2. The cloth bonding device according to claim 1, wherein
the fold-back mechanism includes
an upward folding portion (120) configured to come into contact with a surface on the opposite side to an adhesive adhesion surface, to which the adhesive is adhered, of the edge portion, and to fold the edge portion upward, and
a lateral folding portion (130) disposed on the downstream side of the upward folding portion in the conveyance direction, and configured to come into contact with the surface on the opposite side to the adhesive adhesion surface of the edge portion, and to fold the edge portion, which has been folded upward by the upward folding portion, in a lateral direction, and to dispose the edge portion above the facing portion with the adhesive adhesion surface facing downward,
each of the upward folding portion and the lateral folding portion is able to independently move between a folding position and a retreat position, the folding position being a position at which the cloth is folded and being positioned on a conveyance path of the cloth, on one side in a transverse direction intersecting the conveyance direction and the up-down direction, and the retreat position being a position that is on the other side in the transverse direction with respect to the folding position and at which each of the upward folding portion and the lateral folding portion retreats from the conveyance path of the cloth,
the fold-back mechanism moves the upward folding portion and the lateral folding portion to the retreat position before conveying the cloth, and
when the cloth is being conveyed, the fold-back mechanism moves the upward folding portion to the folding position and folds the edge portion upward, and then moves the lateral folding portion to the folding position and folds the edge portion in the lateral direction.

3. The cloth bonding device according to claim 2, wherein
a surface on the one side in the transverse direction of the upward folding portion forms
a first inclined portion (122) that is inclined upwardly from the one side toward the other side in the transverse direction, and
a second inclined portion (124) that is positioned on the downstream side of the first inclined portion in the conveyance direction, and that is inclined upwardly from the one side toward the other side in the transverse direction,
a inclined surface on the one side in the transverse direction of the second inclined portion has the same angle of inclination as that of an inclined surface of the first inclined portion, and
an inclined surface on the other side in the transverse direction of the second inclined portion has a larger angle of inclination than that of the inclined surface of the first inclined portion, and is positioned further to the one side than an end portion of the first inclined portion on the other side in the transverse direction.

4. The cloth bonding device according to claim 2 or 3, wherein
the lateral folding portion includes a protruding portion (132) which extends toward the one side in the transverse direction, and a bottom surface of which comes into contact with the surface on the opposite side of the adhesive adhesion surface of the edge portion, and
a gap (D3) between the protruding portion and a top surface of the conveyance base is larger than a size of a two-fold thickness of the cloth in the up-down direction with respect to the top surface of the conveyance base, and is smaller than a width of the edge portion in the transverse direction.

5. The cloth bonding device according to any one of claims 2 to 4, wherein
in an arrangement position of the fold-back mechanism,
the top surface of the conveyance base is provided with a curved surface (113) which is inclined upward from the upstream side toward the downstream side in the conveyance direction and which is curved downward, between both end portions of the curved surface in the conveyance direction.

6. The cloth bonding device according to claim 5, further comprising:
a presser plate (140) provided on the one side in the transverse direction of the upward folding portion and the lateral folding portion, the presser plate having a bottom surface, which follows the curved surface of the conveyance base, and extending in the conveyance direction; and
an up-and-down support portion (150) configured to support the presser plate movably in the up-down direction,
wherein
at a time of conveying the cloth, a position in the up-down direction of the presser plate supported by the up-and-down support portion is a position in which the facing portion of the cloth is disposed between the bottom surface of the presser plate and the curved surface of the conveyance base.

7. The cloth bonding device according to claim 6, further comprising:
a drive portion (170) configured to generate motive power that drives the up-and-down support portion and to move the presser plate in the up-down direction,
wherein
the presser plate is able to be positioned at
an upper end position, which is an upper end of a range over which the presser plate is able to move in the up-down direction,
a lower end position, which is a lower end of the range over which the presser plate is able to move in the up-down direction, and at which the presser plate is in contact with the curved surface, and
an intermediate position, which is between the upper end position and the lower end position, and at which a gap (D4) is formed between the presser plate and the curved surface, and
the intermediate position is changeable in the up-down direction.

8. The cloth bonding device according to claim 7, further comprising:
a presser support portion (160) configured to support the presser plate movably in the transverse direction, and
a presser fixing member (154) configured to fix a position in the transverse direction of the presser support portion.

9. The cloth bonding device according to any one of claims 2 to 8, wherein
the nozzle includes
a plurality of discharge outlets (17A) aligned in the transverse direction, and
a positioning plate (19), which is positioned further to the other side in the transverse direction than the discharge outlet positioned at the end on the other side in the transverse direction, among the plurality of discharge outlets, and is positioned at a distance closer to the discharge outlet at the end than at least a distance between two of the discharge outlets, the positioning plate being configured to determine a position of the edge portion of the cloth.

10. The cloth bonding device according to claim 9, wherein
the positioning plate is able to move in the transverse direction, and
the positioning plate includes a position fixing member (20,21) configured to fix a position of the positioning plate in the transverse direction.

11. The cloth bonding device according to any one of claims 1 to 10, further comprising:
a feed roller (13) positioned on the downstream side of the nozzle in the conveyance direction and positioned below the cloth on the upstream side of the fold-back mechanism in the conveyance direction, the feed roller forming a predetermined gap between the feed roller and the nozzle, and being configured to feed the cloth to the downstream side in the conveyance direction.
